# EUROPEAN PATENT SPECIFICATION

(11) **EP 2 846 387 B1**
(45) Date of publication and mention of the grant of the patent: **11.01.2017**
(21) Application number: 14164282.7
(22) Date of filing: 10.04.2014
(51) Int. Cl.: H01M 8/04664, H02J 1/08, H02J 1/10, H01M 8/04537, H02J 1/00

(54) **Apparatus and method for controlling fuel cell system using sub-power conditioning system**
Vorrichtung und Verfahren zur Steuerung einer Brennstoffzellenanlage mit einer Unteraufbereitungsanlage
Appareil et procédé de commande de système de pile à combustible utilisant un système de conditionnement de subdivision

(30) Priority: 04.09.2013 KR 20130106026
(43) Date of publication of application: 11.03.2015
(73) Proprietor: SK Innovation Co., Ltd., Seoul 110-110 (KR)
(72) Inventor: Kang, Byung Hee, 305-722 Daejeon (KR); Yang, Jin Sik, 305-308 Daejeon (KR)
(74) Representative: Herzog, Fiesser & Partner Patentanwälte PartG mbB

(56) References cited:
- US-A1- 2004 202 901
- US-A1- 2006 127 710

## Description

### BACKGROUND OF THE INVENTION

### 1. Technical Field

The present disclosure relates generally to apparatuses and methods for controlling fuel cell systems and, more particularly, to an apparatus and method for controlling a fuel cell system using a sub-power conditioning system.

### 2. Description of the Related Art

Fuel cell stacks refer to a structure in which several tens through several hundreds of unit fuel cells are stacked on top of one another and connected to each other to obtain desired electric power output. To produce a large capacity fuel cell system, a plurality of fuel cell stacks must be connected to each other. Typically, the fuel cell stacks are connected in series, parallel or series-parallel to each other. If a problem occurs in at least one stack of the connected fuel cell stacks and the performance thereof deteriorates, current is concentrated on the remaining normal stacks, thus affecting the lifetime and durability of the normal stacks.

US 2006/0127710 A1 describes a system and a method for bypassing failed stacks in a multiple stack fuel cell.

US 2004/0202901 A1 describes a system stack contingency and efficiency switching.

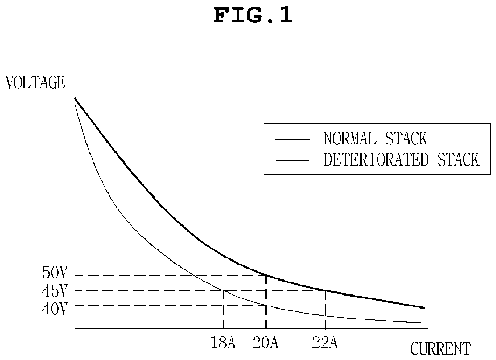

FIG. 1 is a graph showing the effect of deterioration in performance of a deteriorated stack on a normal stack. If a normal stack having operating voltage of 50V at 20A and a deteriorated stack having operating voltage of 40V at 20A are connected in parallel to each other and a load of 40A is applied thereto, current is concentrated to the normal stack that has comparatively high power efficiency.

Thereby, as shown in FIG. 1, the normal stack is operated in an area of 22A, greater than 40A/2 = 20A, and 45V. Thus, a heat generation rate is increased, whereby the lifetime of the normal stack is reduced. On the other hand, the deteriorated stack is operated in an area of 18A, less than 20A by an increment in current of the normal stack, and 45V. That is, when the stacks are connected in parallel to each other, voltages applied to the stacks become the same, but a phenomenon of current being biased to one side along the current-voltage curve of the stacks is caused. As such, if at least one among the stacks that are connected in parallel to each other is deteriorated, a current load is concentrated to the remaining normal stack, thus having a disastrous effect on the lifetime and durability of the normal stack.

In the patent document of the following prior art document, power equipment was introduced, which has a fuel cell system array which is configured such that when a fuel cell system is defective or malfunctioned, the fuel cell system is disconnected from a power bus by a switch and an auxiliary fuel cell system is connected to the power bus so that power can be reliably supplied to a load. However, the following patent document introduces only the structure in which the fuel cell system that has been defective or malfunctioned is disconnected from and the auxiliary fuel cell system is connected to the power bus, but does not propose any structure for controlling deteriorated fuel cell stacks to use them as a power supply for a sub-load.

Therefore, an apparatus and method for controlling a fuel cell system are required, which separate deteriorated fuel cell stacks from a main power conditioning system to prevent deterioration in performance of some stacks from affecting the other normal stacks, thus minimizing a reduction in the lifetime and durability of the entirety of the fuel cell system, and which separately control the deteriorated fuel cell stacks to provide power to a sub-load through a sub-power conditioning system (sub-PCS), whereby the fuel cell system can be efficiently used.

### [Prior art document]

### [Patent document]

(Patent document 1) Japanese Unexamined Patent Publication No. 2005-526363

### SUMMARY OF THE INVENTION

The present disclosure has been made in an effort to provide an apparatus for controlling a fuel cell system according to claim 1 which separates deteriorated fuel cell stacks from a main power conditioning system to prevent deterioration in performance of some stacks from affecting the other normal stacks, thus minimizing a reduction in the lifetime and durability of the entirety of the fuel cell system, and which separately controls the deteriorated fuel cell stacks to provide power to a sub-load through a sub-power conditioning system (sub-PCS), whereby the fuel cell system can be efficiently used.

The present disclosure also provides a method for controlling a fuel cell system according to claim 14 which separates deteriorated fuel cell stacks from a main power conditioning system to prevent deterioration in performance of some stacks from affecting the other normal stacks, thus minimizing a reduction in the lifetime and durability of the entirety of the fuel cell system, and which separately controls the deteriorated fuel cell stacks to provide power to a sub-load through a sub-power conditioning system (sub-PCS), whereby the fuel cell system can be efficiently used.

In an apparatus for controlling a fuel cell system according to an embodiment of the present disclosure, a main power conditioning system supplies output of normal stacks among a plurality of fuel cell stacks to a load. A sub-power conditioning system supplies output of one or more deteriorated stacks among the fuel cell stacks to a load. A switching unit changes a target to which output of each of the fuel cell stacks is connected. A control unit senses conditions of each of the fuel cell stacks and controls the switching unit.

Furthermore, a stack condition sensing unit may sense conditions of the fuel cell stacks and transmit information about the conditions of the fuel cell stacks to the control unit.

When at least one deteriorated stack is detected based on the transmitted information about the conditions of the fuel cell stacks, the control unit may separate output of the at least one deteriorated stack from the main power conditioning system and connect the output to the sub-power conditioning system.

When at least one inoperative stack is detected based on the transmitted information about the conditions of the fuel cell stacks, the control unit may separate the inoperative stack from the main power conditioning system.

The normal stacks that provide the output thereof to the main power conditioning system may be re-connected in series, parallel or series-parallel to each other, other than the at least one deteriorated stack.

The one or more deteriorated stacks may be re-connected in series.
The switching unit may include: a positive voltage switching unit for switching a target to which positive voltage of each of the fuel cell stacks is supplied; a negative voltage switching unit for switching a target to which negative voltage of each of the fuel cell stacks is supplied; and a deteriorated-stack connection switching unit connecting the deteriorated stacks in series to each other and providing output of the deteriorated stacks to the sub-power conditioning system.

When n is an integer of 2 or more, the stacks may include an n number of stacks, the stack condition sensing unit may include an n number of shunt resistors, and first ends of the first through n-th shunt resistors may be respectively connected to positive electrodes of the first through n-th stacks.

The positive voltage switching unit may include first through n-th positive voltage switches. The negative voltage switching unit may include first through n-th negative voltage switches. The deteriorated-stack connection switching unit may include first through n-th deteriorated-stack connection switches.

Each of the first through n-th positive voltage switches may include a common terminal and first through third terminals. Each of the first through n-th negative voltage switches may include a common terminal and first through third terminals. Each of the first through (n-1)th deteriorated-stack connection switches may include a common terminal and first through third terminals. The n-th deteriorated-stack connection switch may include a common terminal, a first terminal and a second terminal.

Each of the first through n-th positive voltage switches, the first through n-th negative voltage switches and the first through (n-1)th deteriorated-stack connection switches may connect the corresponding common terminal to one of the corresponding first through third terminals in response to a control signal of the control unit. The n-th deteriorated-stack connection switch may connect the corresponding common terminal to the corresponding first or second terminal in response to a control signal of the control unit.

The common terminals of the first through n-th positive voltage switches may be respectively connected to second ends of the first through n-th shunt resistors. The first terminals of the first through n-th positive voltage switches may be respectively connected to a positive voltage input terminal of the main power conditioning system. The second terminals of the first through n-th positive voltage switches may be open.

The common terminals of the first through n-th negative voltage switches may be respectively connected to negative electrodes of the first through n-th stacks. The first terminals of the first through n-th negative voltage switches may be connected to a negative voltage input terminal of the main power conditioning system. The second terminals of the first through n-th negative voltage switches may be open.

The common terminals of the first through (n-1)th deteriorated-stack connection switches may be respectively connected to the third terminals of the second through n-th positive voltage switches. The first terminals of the first through n-th deteriorated-stack connection switches may be respectively connected to the third terminals of the first through n-th negative voltage switches. The second terminals of the second through n-th deteriorated-stack connection switches may be respectively connected to the common terminals of the first through (n-1)th deteriorated-stack connection switches. The third terminals of the first through (n-1)th deteriorated-stack connection switches and the common terminal of the n-th deteriorated-stack connection switch may be connected to a negative voltage input terminal of the sub-power conditioning system. The second terminal of the first deteriorated-stack connection switch and the third terminal of the first positive voltage switch may be connected to a positive voltage input terminal of the sub-power conditioning system.

The fuel cell stacks may be arranged in an array of n1×1, n1×n2 or n1 xn2xn3, when each of n1, n2 and n3 is an integer of 2 or more.

The stacks of the stack array may be connected in series, parallel or series-parallel to each other.

The fuel cell stacks may form a plurality of fuel cell stack modules, each of which includes a predetermined number of fuel cell stacks.

The control unit may sense conditions of the fuel cell stack modules, and when at least one deteriorated stack module is detected, the at least one deteriorated stack module may be separated from the main power conditioning system.

The control unit may connect output of the at least one deteriorated stack module to the sub-power conditioning system.

A method for controlling a fuel cell system according to an embodiment of the present disclosure includes determining, by a control unit, whether at least one deteriorated stack or inoperative stack is present using information about conditions of fuel cell stacks; and controlling a switching unit when it is determined that at least one deteriorated stack or inoperative stack is present, and separating output of the at least one deteriorated stack or inoperative stack from a main power conditioning system.

The control unit may control the switching unit and connects the output of the at least one deteriorated stack to a sub-power conditioning system.

The normal stacks that provide output to the main power conditioning system may be re-connected in series, parallel or series-parallel to each other, other than the at least one deteriorated stack.

Deteriorated stacks that provide output to the sub-power conditioning system may be connected in series to each other.

The switching unit may include: a positive voltage switching unit for switching a target to which positive voltage of each of the fuel cell stacks is supplied; a negative voltage switching unit for switching a target to which negative voltage of each of the fuel cell stacks is supplied; and a deteriorated-stack connection switching unit connecting the deteriorated stacks in series to each other and providing the output of the deteriorated stacks to the sub-power conditioning system.

The fuel cell stacks may form a plurality of fuel cell stack modules, each of which includes a predetermined number of fuel cell stacks.

The control unit may sense conditions of the fuel cell stack modules, and when at least one deteriorated stack module is detected, the at least one deteriorated stack module may be separated from the main power conditioning system.

The control unit may connect output of the at least one deteriorated stack module to the sub-power conditioning system.

In the present disclosure, when some fuel cell stacks are deteriorated, the deteriorated fuel cell stacks are separated from a main power conditioning system to prevent deterioration in performance of some stacks from affecting the other normal stacks. Thereby, a reduction in the lifetime and durability of the entirety of the fuel cell system can be minimized. Furthermore, the deteriorated fuel cell stacks are separately controlled to provide power to a sub-load through a sub-power conditioning system. Therefore, the fuel cell system can be efficiently used. Moreover, inoperative stacks are separated from the fuel cell system, whereby a reduction in the lifetime and durability of the entirety of the fuel cell system can be more reliably minimized.

### BRIEF DESCRIPTION OF THE DRAWINGS

The above and other objects, features and advantages of the present disclosure will be more clearly understood from the following detailed description taken in conjunction with the accompanying drawings, in which:
FIG. 1 is a graph showing the effect of deterioration in performance of a deteriorated stack on a normal stack;
FIG. 2 is a block diagram illustrating an apparatus for controlling a fuel cell system using a sub-power conditioning system which is in a normal generation state according to an embodiment of the present disclosure;
FIG. 3 is a block diagram illustrating the fuel-cell-system control apparatus using the sub-power conditioning system which is in a generation state when a deteriorated stack occurs according to the present disclosure;
FIG. 4 is a block diagram illustrating the fuel-cell-system control apparatus using the sub-power conditioning system which is in a generation state when a deteriorated stack or an inoperative stack occurs according to the present disclosure; and
FIG. 5 is a flowchart showing a method for controlling the fuel cell system using the sub-power conditioning system according to the present disclosure.

### DESCRIPTION OF THE PREFERRED EMBODIMENTS

The objects, features and advantages of the present disclosure will be more clearly understood from the following detailed description of the preferred embodiments taken in conjunction with the accompanying drawings.

Throughout the accompanying drawings, the same reference numerals are used to designate the same or similar components, and redundant descriptions thereof are omitted.

Further, in the following description, the terms "first", "second", "one side", "the other side" and the like are used to differentiate a certain component from other components, but the configuration of such components should not be construed to be limited by the terms.

Further, in the description of the present disclosure, when it is determined that the detailed description of the related art would obscure the gist of the present disclosure the description thereof will be omitted.

Hereinafter, preferred embodiments of the present disclosure will be described in detail with reference to the attached drawings.

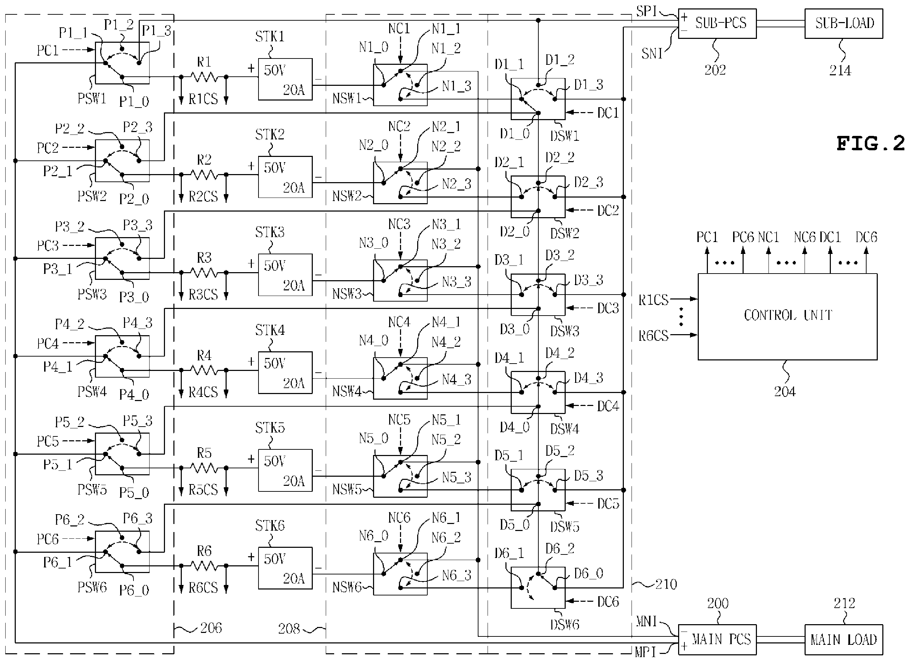

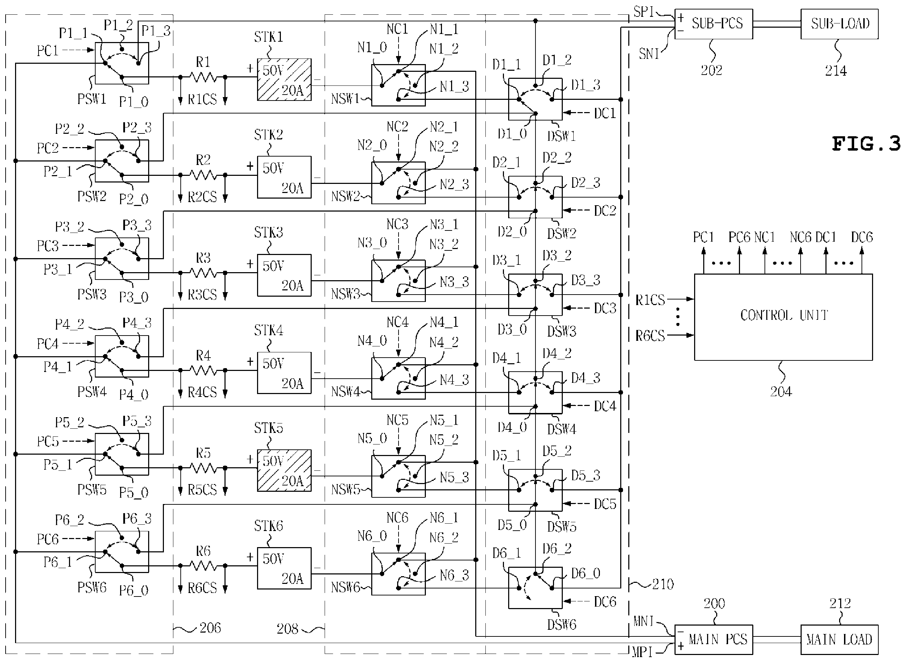

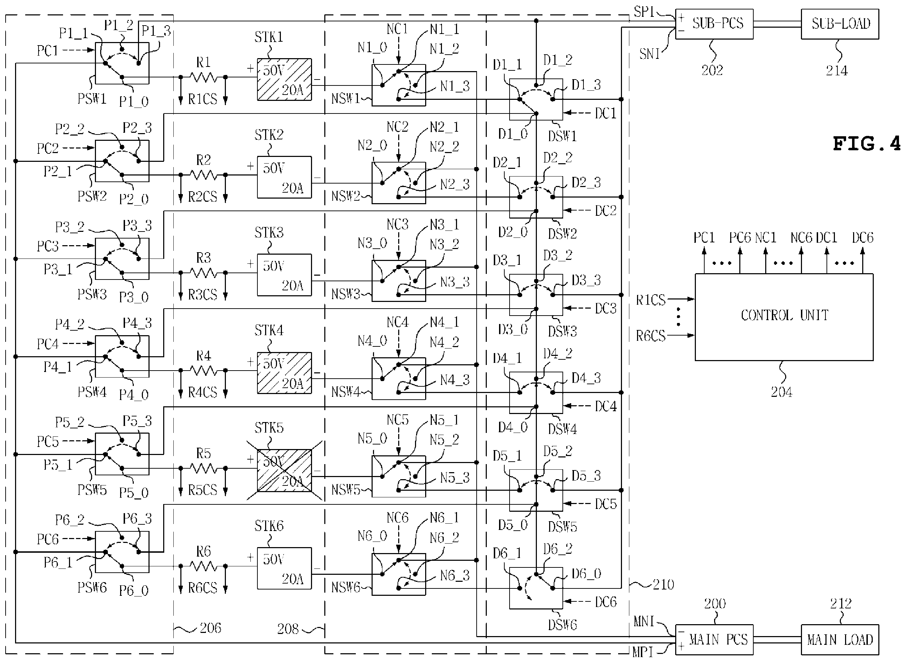

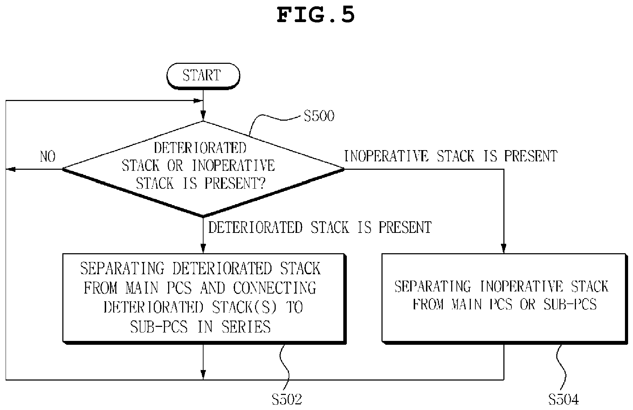

FIG. 2 is a block diagram illustrating an apparatus for controlling a fuel cell system using a sub-power conditioning system which is in a normal generation state according to an embodiment of the present disclosure. FIG. 3 is a block diagram illustrating the fuel-cell-system control apparatus using the sub-power conditioning system which is in a generation state when a deteriorated stack occurs according to the present disclosure. FIG. 4 is a block diagram illustrating the fuel-cell-system control apparatus using the sub-power conditioning system which is in a generation state when a deteriorated stack or an inoperative stack occurs according to the present disclosure. FIG. 5 is a flowchart showing a method for controlling the fuel cell system apparatus using the sub-power conditioning system according to the present disclosure.

Hereinafter, the apparatus and method for controlling the fuel cell system using the sub-power conditioning system according to the present disclosure will be described with reference to FIGS. 1 through 5.

As shown in FIG. 2, the fuel-cell-system control apparatus using the sub-power conditioning system according to the present disclosure includes a main power conditioning system 200 which supplies output of normal stacks among first through sixth fuel cell stacks STK1 through STK6 to a main load, the sub-power conditioning system 202 which supplies output of deteriorated stacks among the first through sixth fuel cell stacks STK1 through STK6 to a sub-load, a plurality of switching units 206, 208 and 210 which change a target to which output of each of the first through sixth fuel cell stacks STK1 through STK6 is transmitted, a control unit 204 which senses conditions of the first through sixth fuel cell stacks STK1 through STK6 and controls the switching units 206, 208 and 210, and first through sixth shunt resistors R1 through R6 which function as a stack condition sensing unit to sense conditions of the first through sixth fuel cell stacks STK1 through STK6 and transmit information about the conditions of the stacks to the control unit. Furthermore, the first through sixth shunt resistors R1 through R6 respectively sense current that flows through the first through sixth fuel cell stacks STK1 through STK6.

The switching units 206, 208 and 210 include a positive voltage switching unit 206 which switches a target to which positive voltage of the first through sixth fuel cell stacks SKT1 through SKT6 is supplied, a negative voltage switching unit 208 which switches a target to which negative voltage of the first through sixth fuel cell stacks SKT1 through SKT6 is supplied, and a deteriorated-stack connection switching unit 210 which connects the deteriorated stacks in series and provides output of the deteriorated stacks to the sub-power conditioning system 202.

First ends of the first through sixth shunt resistors R1 through R6 are respectively connected to positive electrodes of the first through sixth fuel cell stacks SKT1 through SKT6.

The positive voltage switching unit 206 includes first through sixth positive voltage switches PSW1 through PSW6. The negative voltage switching unit 208 includes first through sixth negative voltage switches NSW1 through NSW6. The deteriorated-stack connection switching unit 210 includes first through sixth deteriorated-stack connection switches DSW1 through DSW6.

The first through sixth positive voltage switches PSW1 through PSW6 include respective common terminals P1_0 through P6_0, respective first terminals P1_1 through P6_1, respective second terminals P1_2 through P6_2 and respective third terminals P1_3 through P6_3.

The first through sixth negative voltage switches NSW1 through NSW6 include respective common terminals N1 -0 through N6_0, respective first terminal N1_1 through N6_1, respective second terminals N1_2 through N6_2 and respective third terminals N1_3 through N6_3.

The first through fifth deteriorated-stack connection switches DSW1 through DSW5 include respective common terminals D1_0 through D5_0, respective first terminals D1_1 through D5_1, respective second terminals D1_2 through D5_2 and respective third terminals D1_3 through D5_3. The sixth deteriorated-stack connection switch DSW6 includes a common terminal D6_0, a first terminal D6_1 and a second terminal D6_2.

Each of the first through sixth positive voltage switches PSW1 through PSW6, first through sixth negative voltage switches NSW1 through NSW6 and first through fifth deteriorated-stack connection switches DSW1 through DSW5 is an SPTT (single pole triple throw) switch which electrically connects a common terminal to one of first through third terminals in response to a control signal. The sixth deteriorated-stack connection switch DSW6 is an SPDT (single pole double throw) switch which electrically connects a common terminal to the first or second terminal. However, the first through sixth positive voltage switches PSW1 through PSW6, the first through sixth negative voltage switches NSW1 through NSW6 and the first through sixth deteriorated-stack connection switches DSW1 through DSW6 according to the prevent disclosure are not limited to the above-mentioned SPTT or SPDT switch. In other words, they may be embodied by other kinds of switches, so long as these switches can have the same function as that of the SPTT or SPDT switch.

Each of the first through sixth positive voltage switches PSW1 through PSW6, first through sixth negative voltage switches NSW1 through NSW6 and first through fifth deteriorated-stack connection switches DSW1 through DSW5 connects a common terminal to one of first through third terminals in response to a corresponding one of control signals PC 1 through PC6, NC1 through NC6 and DC1 through DC5 of the control unit 204. The sixth deteriorated-stack connection switch DSW6 connects a common terminal D6_0 to the first common terminal D6_1 or second common terminal D6_2 in response to a control signal DC6 of the control unit 204.

The common terminals P1_0 through P6_0 of the first through sixth positive voltage switches PSW1 through PSW6 are respectively connected to second ends of the first through sixth shunt resistors R1 through R6. The first terminals P1_1 through P6_1 of the first through sixth positive voltage switches PSW1 through PSW6 are connected to a positive voltage input terminal MPI of the main power conditioning system 200. The second terminals P1_2 through P6_2 of the first through sixth positive voltage switches PSW1 through PSW6 are open.

The common terminals N1_0 through N6_0 of the first through sixth negative voltage switches NSW1 through NSW6 are respectively connected to negative electrodes of the first through sixth stacks STK1 through STK6. The first terminals N1_1 through N6_1 of the first through sixth negative voltage switches NSW1 through NSW6 are connected to a negative voltage input terminal MNI of the main power conditioning system 200. The second terminals N1_2 through N6_2 of the first through sixth negative voltage switches NSW1 through NSW6 are open.

The common terminals D1_0 through D5_0 of the first through fifth deteriorated-stack connection switches DSW1 through DSW5 are respectively connected to the third terminals P2_3 through P6_3 of the second through sixth positive voltage switches PSW 2 through PSW 6. The first terminals D1_1 through D6_1 of the first through sixth deteriorated-stack connection switches DSW1 through DSW6 are respectively connected to the third terminals N1_3 through N6_3 of the first through sixth negative voltage switches NSW1 through NSW6.

The second terminals D2_2 through D6_2 of the second through sixth deteriorated-stack connection switches DSW2 through DSW6 are respectively connected to the common terminals D1_0 through D5_0 of the first through fifth deteriorated-stack connection switches DSW1 through DSW5. The third terminals D1_3 through D5_3 of the first through fifth deteriorated-stack connection switches DSW1 through DSW5 and the common terminal D6_0 of the sixth deteriorated-stack connection switch DSW6 are connected to a negative voltage input terminal SNI of the sub-power conditioning system 202. The second terminal D1_2 of the first deteriorated-stack connection switch DSW1 and the third terminal P1_3 of the first positive voltage switch PSW1 are connected to a positive voltage input terminal SPI of the sub-power conditioning system 202.

While the term "connection" refers to electrical connection, the present disclosure is not limited to this. Also, in the embodiment of the present disclosure shown in FIG. 2, although the fuel-cell-system control apparatus has been illustrated as controlling the six stacks, that is, the first through sixth stacks STK1 through STK6, the present disclosure is not limited to this. If n is an integer of 2 or more, the fuel-cell-system control apparatus controls n number of stacks including the first through n-th stacks STK1 through STKn (not shown). In this case, the construction of the switching units 206, 208 and 210 of FIG. 2 may be expanded to change a target to which output of each of the first through n-th stacks STK1 through STKn is transmitted.

In other words, the positive voltage switching unit 206 includes first through n-th positive voltage switches PSW1 through PSWn, the negative voltage switching unit 208 includes first through n-th negative voltage switches NSW1 through NSWn, and the deteriorated-stack connection switching unit 210 includes first through n-th deteriorated-stack connection switches DSW1 through DSWn, thus making it possible to change a target to which output of each of the first through n-th stacks STK1 through STKn is transmitted.

The first through n-th positive voltage switches PSW1 through PSWn, the first through n-th negative voltage switches NSW1 through NSWn and the first through n-th deteriorated-stack connection switches DSW1 through DSWn may be respectively controlled by the control signals PC1 through PCn, NC1 through NCn, DC1 through DCn of the control unit 204.

The fuel-cell-system control apparatus according to the embodiment of FIG. 2 may be configured such that it controls a plurality of fuel cell stacks, which are arranged in an array of n1×1, n1×n2 or n1×n2×n3 when each of n1, n2 and n3 is an integer of 2 or more, and are connected in series, parallel or series-parallel (not shown) to each other. In this case, the construction of the switching units 206, 208 and 210 shown in FIG. 2 may be expanded to change a target to which output of each of n1×1 number of stacks, n1×2 number of stacks and n1×n2×n3 number of stacks which are connected in series, parallel or series-parallel to each other is transmitted.

The fuel-cell-system control apparatus according to the embodiment of FIG. 2 may further include first-b through sixth-b stacks STK1b through STK6b (not shown) which are respectively connected in series between the first through sixth stacks STK1 through STK6 and the first through sixth negative voltage switches NSW1 through NSW6.

In FIG. 2, the control unit 204 and the switching unit 206, 208 and 210 control the connection of the fuel cell stacks, but the present disclosure is not limited to this. That is, the apparatus according to the embodiment may be configured such that the fuel cell stacks form a plurality of fuel cell stack modules each of which includes a predetermined number of fuel cell stacks, and the control unit 204 and the switching unit 206, 208 and 210 control the connection of the fuel cell stack modules. In the case, the control unit 204 senses conditions of the fuel cell stack modules. If at least one deteriorated stack module is detected, the deteriorated stack module is separated from the main power conditioning system 200 and then connected to the sub-power conditioning system 202. In other words, the control unit 204 divides the fuel cell stacks by modules and controls connection between the modules.

Hereinafter, the operation of the fuel-cell-system control apparatus according to the embodiment of the present disclosure having the above-mentioned construction will be explained.

### Operation of apparatus when all stacks are normal.

In FIG. 2, the control unit 204 determines whether a deteriorated stack is present or not based on current that flows through the first through sixth stacks STK1 through STK6 from the first through sixth shunt resistors R1 through R6.

As shown in FIG. 2, when all of the stacks are normally operated, the control unit 204 outputs the control signals PC1 through PC6, NC1 through NC6, DC1 through DC6 to the switching unit 206, 208 and 210 such that the first through sixth stacks STK1 through STK6 are connected in parallel to each other, thus supplying the output of the first through sixth stacks STK1 through STK6 to the main power conditioning system 200.

### Operation of apparatus when deteriorated stack is present.

FIG. 3 illustrates the operation of the apparatus when a deteriorated stack is present. The control unit 204 determines whether at least one deteriorated stack is present or not based on current that flows through the first through sixth stacks STK1 through STK6 from the first through sixth shunt resistors R1 through R6. In the case of FIG. 3, because the level of current which flows through the first and fifth stacks STX1 and STX5 is smaller than that of the normal stacks or deviation in current between the stacks is caused, the control unit 204 determines that the first and fifth stacks STX1 and STX5 are deteriorated.

The control unit 204 thus controls the first positive voltage switch PSW1 and the first negative voltage switch NSW1 and separates the first stack STK1 that has deteriorated from the main power conditioning system 200. The control unit 204 controls the fifth positive voltage switch PSW5 and the fifth negative voltage switch NSW5 and separates the fifth stack STK5 that has deteriorated from the main power conditioning system 200. Thereby, deterioration in performance of the first stack STK1 and fifth stack STK5 that have deteriorated can be prevented from being affected to the second through fourth stacks STK2 through STK4 and sixth stack STK6 that are normal.

The above-mentioned operation will be explained in detail. The control unit 204 transmits an appropriate control signal PC1 to the positive voltage switch PSW1 and electrically connects the common terminal P1_0 of the positive voltage switch PSW1 to the third terminal P1_3. Further, the control unit 204 transmits an appropriate control signal NC1 to the negative voltage switch NSW1 and electrically connects the common terminal N1_0 of the negative voltage switch NSW1 to the third terminal N1_3.

Also, the control unit 204 transmits an appropriate control signal PC5 to the fifth positive switch PSW5 and electrically connects the common terminal P5_0 of the fifth positive switch PSW5 to the third terminal P5_3. The control unit 204 transmits an appropriate control signal NC5 to the fifth negative switch NSW5 and electrically connects the common terminal N5_0 of the fifth negative voltage switch NSW5 to the third terminal N5_3.

Thereby, the first and fifth stacks STX1 and STX5 that have deteriorated are separated from the positive input terminal MPI of the main power conditioning system 200, thus preventing the deterioration in performance of the first and fifth stacks STX1 and STX5 that have deteriorated from being affected to the second through fourth stacks STX2 through STX4 and sixth stack STX6 that are normal.

The control unit 204 controls the first through sixth deteriorated-stack connection switches DSW1 through DSW6 and connects the first stack STK1 to the fifth stack STX5 in series. The control unit 204 also connects the first and fifth stacks STX1 and STX5 that are connected in series to each other to the sub-power conditioning system 202 so that the output of the first and fifth stacks STX1 and STX5 that have deteriorated can be supplied to the sub-power conditioning system 202.

The above-mentioned operation will be explained in detail. The control unit 204 transmits appropriate control signals DC1 and DC5 to the first and fifth deteriorated-stack connection switches DSW1 and DSW5 and respectively electrically connects the common terminals D1_0 and D5_0 of the first and fifth deteriorated-stack connection switches DSW1 and DSW5 to the first terminals D1_1 and D5-1. The control unit 204 further transmits appropriate control signals DC2 through DC4 to the second through fourth deteriorated-stack connection switches DSW2 through DSW4 and respectively electrically connects the common terminals D2_0 through D4_0 of the second through fourth deteriorated-stack connection switches DSW2 through DSW4 to the second terminals D2_2 through D4_2. The control unit 204 transmits an appropriate control signal DC6 to the sixth deteriorated-stack connection switch DSW6 and electrically connects the common terminal D6_0 of the sixth deteriorated-stack connection switch DSW6 to the second terminal D6_2.

Thereby, the first and fifth stacks STK1 and STK5 that have deteriorated are connected in series to the sub-power conditioning system 202.

When the target to which the output of the stacks is transmitted is changed in the above-mentioned manner, the main power conditioning system 200 can normally receive power from the second through fourth stacks STX2 through STX4 and sixth stack STX6 that are normal and are connected in parallel to each other, and the sub-power conditioning system 202 can receive power from the first and fifth stacks STK1 and STK5 that have deteriorated and been connected in series to each other.

The output of the second through fourth stacks STK2 through STK4 and sixth stack STK6 that are normal and are connected in parallel to each other is used to operate a main load 212 through the main power conditioning system 200.

The output of the first and fifth stacks STX1 and STX5 that are deteriorated and are connected in series to each other is used to operate a sub-load 214, that is, a partial load, through the sub-power conditioning system 202 in consideration of voltage. Therefore, the first and fifth stacks STX1 and STX5 that are deteriorated and are connected in parallel to each other operate at constant load current and do not affect to each other with regard to deterioration in performance, so that the speed of deterioration can be minimized.

### Operation of apparatus when deteriorated stack and inoperative stack are present.

FIG 4 illustrates the operation of the apparatus when a deteriorated stack and inoperative stack are present. The control unit 204 determines whether at least one of deteriorated stack and an inoperative stack is present based on currents that flow through the first through sixth stacks STX1 through STX6 from the first through sixth shunt resistors R1 through R6. In the case of FIG. 4, because the level of currents which flow through the first and fourth stacks STX1 and STX4 is smaller than that of the normal stacks or deviation in currents between the stacks is caused, the control unit 204 determines that the first and fourth stacks and STX1 and STX4 are deteriorated. Also, because the level of current which flows through the fifth stack STX5 is less than a predetermined level of current, the control unit 204 determines that the fifth stack STX5 is inoperative.

The control unit 204 controls the first positive voltage switch PSW1 and the first negative voltage switch NSW1 and separates the first stack STX1 that has deteriorated from the main power conditioning system 200. The control unit 204 controls the fourth positive voltage switch PSW4 and the fourth negative voltage switch NSW4 and separates the fourth stack STX4 that has deteriorated from the main power conditioning system 200. Thereby, deterioration in performance of the first and fourth stacks STX1 and STX4 that have deteriorated can be prevented from affecting the second stack STX2, the third stack STX3 and the sixth stack STX6 that are normal. The control unit 204 controls the fifth positive voltage switch PSW5 and the fifth negative voltage switch NSW5 and separates the fifth stack STX5 that is inoperative from the main power conditioning system 200.

The above-mentioned operation will be explained in detail. The control unit 204 transmits an appropriate control signal PC1 to the first positive voltage switch PSW1 and electrically connects the common terminal P1_0 of the first positive voltage switch PSW1 to the third terminal P1_3. The control unit 204 transmits an appropriate control signal NC1 to the first negative voltage switch NSW1 and electrically connects the common terminal N1_0 of the first negative voltage switch NSW1 to the third terminal N1_3.

The control unit 204 transmits an appropriate control signal PC4 to the fourth positive voltage switch PSW4 and electrically connects the common terminal P4_0 of the fourth positive voltage switch PSW4 to third terminal P4_3. The control unit 204 transmits an appropriate control signal NC4 to the fourth negative voltage switch NSW4 and electrically connects the common terminal N4_0 of the fourth negative voltage switch NSW4 to the third terminal N4 3.

Thereby, the first stack STX1 and fourth stack STX4 that have deteriorated are separated from the main power conditioning system 200, thus preventing the deterioration in performance of the first and fourth stacks STX1 and STX4 that have deteriorated from affecting the second, third and sixth stacks STK2, STK3 and STK6.

Furthermore, the control unit 204 transmits an appropriate control signal PC5 to the fifth positive voltage switch PSW5 and electrically connects the common terminal P5_0 of the fifth positive voltage switch PSW5 to the second terminal P5_2. The control unit 204 transmits an appropriate control signal NC5 to the fifth negative voltage switch NSW5 and electrically connects the common terminal N5_0 of the fifth negative voltage switch NSW5 to the second terminal N5_2. The second terminal P5_2 of the fifth positive voltage switch PSW5 and the second terminal N5_2 of the fifth negative voltage switch NSW5 are open rather than being connected to any element. Thus, the fifth stack STX5 that is inoperative is separated from not only the main power conditioning system 200 but also the sub-power conditioning system 202. Thereby, the fifth stack STX5 that is inoperative is prevented from affecting the entirety of the fuel cell system. As a result, a reduction in the lifetime and durability of the fuel cell system can be minimized.

The control unit 204 controls the first through sixth deteriorated-stack connection switches DSW1 through DSW6 and connects the first and fourth stacks STX1 and STX4 that have deteriorated in series to each other. The control unit 204 also connects the first and fourth stacks STX1 and STX4, that have deteriorated and are connected in series to each other, to the sub-power conditioning system 202 so that the output of the first and fourth stacks STX1 and STX4 that have deteriorated is applied to the sub-power conditioning system 202.

The above-mentioned operation will be explained in detail. The control unit 204 respectively transmits appropriate control signals DC1 and DC4 to the first and fourth deteriorated-stack connection switches DSW1 and DSW4 and respectively electrically connects the common terminals D1_0 and D4_0 of the first and fourth deteriorated-stack connection switches DSW1 and DSW4 to the first terminals D1_1 and D4_1.

The control unit 204 respectively transmits appropriate control signals DC2, DC3 and DC5 to the second, third and fifth deteriorated-stack connection switches DSW2, DSW3 and DSW5 and respectively electrically connects the common terminals D2_0, D3_0 and D5_0 of the second, third, and fifth deteriorated-stack connection switches DSW2, DSW3, DSW5 to the second terminals D2_2, D3_2 and D5_2.

The control unit 204 also transmits an appropriate control signal DC6 to the sixth deteriorated-stack connection switch DSW6 and electrically connects the common terminal D6_0 of the sixth deteriorated-stack connection switch DSW6 to the second terminal D6_2.

Therefore, the first and fourth stacks STX1 and STX4 that have deteriorated are connected in series to the sub-power conditioning system 202.

When a target to which the output of the stacks is transmitted is changed in the above-mentioned manner, the main power conditioning system 200 can normally receive power from the second stack STX2, third stack STX3 and sixth stack STX6 that are normal and are connected in parallel to each other. The sub-power conditioning system 202 can receive power from the first stack STX1 and fourth stack STX4 that are deteriorated and connected in series to each other.

Also, output of the second stack STX2, third stack STX3 and sixth stack STX6 that are normal and are connected in parallel to each other is used to operate the main load 212 through the main power conditioning system 200.

The output of the first and fourth stacks STX1 and STX4 that are deteriorated and are connected in series to each other is used to operate the sub-load 214, that is, a partial load, through the sub-power conditioning system 202 in consideration of voltage. Therefore, the first and fourth stacks STX1 and STX4 that are deteriorated and are connected in series to each other operate at constant load current and do not affect to each other with regard to deterioration in performance, so that the speed of deterioration can be minimized.

### Method for controlling fuel cell system using sub-power conditioning system

FIG. 5 is a flowchart showing a method for controlling the fuel cell system using the sub-power conditioning system according to the present disclosure.

Referring to FIG. 5, at step S500, the control unit 204 senses conditions of the first through sixth stacks STK1 through STK6 and determines whether at least one deteriorated or inoperative stack is present from information about conditions of the first through sixth stacks STK1 through STK6

If, at step S500, it is determined that at least one deteriorated stack is present, the control unit 204 controls the switching units 206, 208 and 210 such that the deteriorated stack is separated from the main power conditioning system 200 and connected in series to the sub-power conditioning system 202, at step 502.

If, at step S500, it is determined that at least one inoperative stack is present, the control unit 204 controls the switching units 206, 208 and 210 such that the inoperative stack is separated and isolated both from the main power conditioning system 200 and from the sub-power conditioning system 202, at step 504.

As a result, the deteriorated or inoperative stack can be prevented from affecting the normal stacks, whereby a reduction in the lifetime and durability of the fuel cell system can be minimized. Furthermore, because deteriorated stacks are connected in series to each other and the output thereof is supplied to the sub-power conditioning system, the fuel cell system can be more efficiently used.

The methods discussed in this specification can be embodied by a variety of means depending on application examples. For instance, the methods may be embodied in a form of hardware, firmware, software or a combination of them. In an application example accompanying hardware, a control circuit or a control unit may be embodied by one or more application specific integrated circuits (ASICs), digital signal processors (DSPs), field programmable gate arrays (FPGAs), processors, controllers, micro-controllers, microprocessors, electronic devices, other electronic units designed to carry out the functions discussed in this specification, or a combination of them.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope of the invention.
Accordingly, any and all modifications, variations or equivalent arrangements should be considered to be within the scope of the invention, and the detailed scope of the invention will be disclosed by the accompanying claims.

## Claims

1. An apparatus for controlling a fuel cell system, comprising:
a main power conditioning system for supplying output of normal stacks among a plurality of fuel cell stacks to a load;
a sub-power conditioning system for supplying output of one or more deteriorated stacks among the fuel cell stacks to a load;
a switching unit for changing a target to which output of each of the fuel cell stacks is connected; and
a control unit for conditions of each of the fuel cell stacks and controlling the switching unit.

2. The apparatus as set forth in claim 1, further comprising:
a stack condition sensing unit for sensing conditions of the fuel cell stacks and transmitting information about the conditions of the fuel cell stacks to the control unit.

3. The apparatus as set forth in claim 2, wherein when at least one deteriorated stack is detected based on the transmitted information about the conditions of the fuel cell stacks, the control unit separates output of the at least one deteriorated stack from the main power conditioning system and connects the output to the sub-power conditioning system.

4. The apparatus as set forth in claim 2, wherein when at least one inoperative stack is detected based on the transmitted information about the conditions of the fuel cell stacks, the control unit separates the inoperative stack from the main power conditioning system.

5. The apparatus as set forth in claim 3, wherein the normal stacks that provide the output thereof to the main power conditioning system are re-connected in series, parallel or series-parallel to each other, other than the at least one deteriorated stack.

6. The apparatus as set forth in claim 3, wherein when the one or more deteriorated stacks are re-connected in series.

7. The apparatus as set forth in claim 2, wherein the switching unit comprises:
a positive voltage switching unit for switching a target to which positive voltage of each of the fuel cell stacks is supplied;
a negative voltage switching unit for switching a target to which negative voltage of each of the fuel cell stacks is supplied; and
a deteriorated-stack connection switching unit connecting the deteriorated stacks in series to each other and providing output of the deteriorated stacks to the sub-power conditioning system.

8. The apparatus as set forth in claim 7, wherein when n is an integer of 2 or more, the stacks comprise an n number of stacks, the stack condition sensing unit comprises an n number of shunt resistors, and first ends of the first through n-th shunt resistors are respectively connected to positive electrodes of the first through n-th stacks,
the positive voltage switching unit comprises first through n-th positive voltage switches, the negative voltage switching unit comprises first through n-th negative voltage switches, and the deteriorated-stack connection switching unit comprises first through n-th deteriorated-stack connection switches,
each of the first through n-th positive voltage switches comprises a common terminal and first through third terminals, each of the first through n-th negative voltage switches comprises a common terminal and first through third terminals, each of the first through (n-1) th deteriorated-stack connection switches comprises a common terminal and first through third terminals, and the n-th deteriorated-stack connection switch comprises a common terminal, a first terminal and a second terminal,
each of the first through n-th positive voltage switches, the first through n-th negative voltage switches and the first through (n-1) th deteriorated-stack connection switches connects the corresponding common terminal to one of the corresponding first through third terminals in response to a control signal of the control unit, and the n-th deteriorated-stack connection switch connects the corresponding common terminal to the corresponding first or second terminal in response to a control signal of the control unit.

9. The apparatus as set forth in claim 8, wherein the common terminals of the first through n-th positive voltage switches are respectively connected to second ends of the first through n-th shunt resistors, the first terminals of the first through n-th positive voltage switches are respectively connected to a positive voltage input terminal of the main power conditioning system, and the second terminals of the first through n-th positive voltage switches are open,
the common terminals of the first through n-th negative voltage switches are respectively connected to negative electrodes of the first through n-th stacks, the first terminals of the first through n-th negative voltage switches are connected to a negative voltage input terminal of the main power conditioning system, and the second terminals of the first through n-th negative voltage switches are open,
the common terminals of the first through (n-1)th deteriorated-stack connection switches are respectively connected to the third terminals of the second through n-th positive voltage switches, the first terminals of the first through n-th deteriorated-stack connection switches are respectively connected to the third terminals of the first through n-th negative voltage switches, the second terminals of the second through n-th deteriorated-stack connection switches are respectively connected to the common terminals of the first through (n-1)th deteriorated-stack connection switches, the third terminals of the first through (n-1) th deteriorated-stack connection switches and the common terminal of the n-th deteriorated-stack connection switch are connected to a negative voltage input terminal of the sub-power conditioning system, and the second terminal of the first deteriorated-stack connection switch and the third terminal of the first positive voltage switch are connected to a positive voltage input terminal of the sub-power conditioning system.

10. The apparatus as set forth in claim 1, wherein the fuel cell stacks are arranged in an array of n1×1, n1×n2 or n1×n2×n3, when each of n1, n2 and n3 is an integer of 2 or more.

11. The apparatus as set forth in claim 10, wherein the stacks of the stack array are connected in series, parallel or series-parallel to each other.

12. The apparatus as set forth in claim 1, wherein the fuel cell stacks form a plurality of fuel cell stack modules, each of which comprises a predetermined number of fuel cell stacks, and
the control unit senses conditions of the fuel cell stack modules, and when at least one deteriorated stack module is detected, the at least one deteriorated stack module is separated from the main power conditioning system.

13. The apparatus as set forth in claim 12, wherein the control unit connects output of the at least one deteriorated stack module to the sub-power conditioning system.

14. A method for controlling a fuel cell system, comprising:
determining, by a control unit, whether at least one deteriorated stack or inoperative stack is present using information about conditions of fuel cell stacks; and
controlling a switching unit when it is determined that at least one deteriorated stack or inoperative stack is present, and separating output of the at least one deteriorated stack or inoperative stack from a main power conditioning system,
wherein the control unit controls the switching unit and connects the output of the at least one deteriorated stack to a sub-power conditioning system,
wherein the sub-power conditioning system supplies output of one or more deteriorated stacks to a load.

15. The method as set forth in claim 14, wherein the normal stacks that provide output to the main power conditioning system are re-connected in series, parallel or series-parallel to each other, other than the at least one deteriorated stack.

16. The method as set forth in claim 14, wherein deteriorated stacks that provide output to the sub-power conditioning system are connected in series to each other.

17. The method as set forth in claim 16, wherein the switching unit comprises:
a positive voltage switching unit for switching a target to which positive voltage of each of the fuel cell stacks is supplied;
a negative voltage switching unit for switching a target to which negative voltage of each of the fuel cell stacks is supplied; and
a deteriorated-stack connection switching unit connecting the deteriorated stacks in series to each other and providing the output of the deteriorated stacks to the sub-power conditioning system.

18. The method as set forth in claim 14, wherein the fuel cell stacks form a plurality of fuel cell stack modules, each of which comprises a predetermined number of fuel cell stacks, and
the control unit senses conditions of the fuel cell stack modules, and when at least one deteriorated stack module is detected, the at least one deteriorated stack module is separated from the main power conditioning system.

19. The method as set forth in claim 18, wherein the control unit connects output of the at least one deteriorated stack module to the sub-power conditioning system.

## Patentansprüche

1. Vorrichtung zum Steuern eines Brennstoffzellensystems, umfassend:
ein Haupt-Stromkonditionierungssystem zum Zuführen der Abgabe normaler Stapel unter einer Vielzahl von Brennstoffzellenstapeln zu einer Last;
ein Unter-Stromkonditionierungssystem zum Zuführen der Abgabe eines oder mehrerer verschlechterter Stapel unter den Brennstoffzellenstapeln zu einer Last;
eine Schalteinheit zum Verändern eines Ziels, mit dem die Abgabe jedes der Brennstoffzellenstapel verbunden ist; und
eine Steuereinheit für Zustände jedes der Brennstoffzellenstapel und zum Steuern der Schalteinheit.

2. Vorrichtung gemäß Anspruch 1, ferner umfassend:
eine Stapelzustand-Sensoreinheit zum Erfassen von Zuständen der Brennstoffzellenstapel und Übertragen von Informationen über die Zustände der Brennstoffzellenstapel an die Steuereinheit.

3. Vorrichtung gemäß Anspruch 2, wobei, wenn auf der Grundlage der übertragenen Informationen über die Zustände der Brennstoffzellenstapel wenigstens ein verschlechterter Stapel erkannt wird, die Steuereinheit die Abgabe des wenigstens einen verschlechterten Stapels von dem Haupt-Stromkonditionierungssystem trennt und die Abgabe mit dem Unter-Stromkonditionierungssystem verbindet.

4. Vorrichtung gemäß Anspruch 2, wobei, wenn auf der Grundlage der übertragenen Informationen über die Zustände der Brennstoffzellenstapel wenigstens ein funktionsunfähiger Stapel erkannt wird, die Steuereinheit den funktionsunfähigen Stapel von dem Haupt-Stromkonditionierungssystem trennt.

5. Vorrichtung gemäß Anspruch 3, wobei die normalen Stapel, die ihre Abgabe an das Haupt-Stromkonditionierungssystem liefern, ohne den wenigstens einen verschlechterten Stapel miteinander in Reihe, parallel oder Reihenparallel wiederverbunden werden.

6. Vorrichtung gemäß Anspruch 3, wobei, wenn der eine oder die mehreren verschlechterten Stapel in Reihe wiederverbunden werden.

7. Vorrichtung gemäß Anspruch 2, wobei die Schalteinheit umfasst:
eine positive-Spannung-Schalteinheit zum Schalten eines Ziels, dem positive Spannung von jedem der Brennstoffzellenstapel zugeführt wird;
eine negative-Spannung-Schalteinheit zum Schalten eines Ziels, dem negative Spannung von jedem der Brennstoffzellenstapel zugeführt wird; und
eine verschlechterte-Stapel-Verbindungsschalteinheit, die die verschlechterten Stapel in Reihe miteinander verbindet und die Abgabe der verschlechterten Stapel dem Unter-Stromkonditionierungssystem zuführt.

8. Vorrichtung gemäß Anspruch 7, wobei, wenn n eine ganze Zahl von 2 oder mehr ist, die Stapel eine Zahl von n Stapeln umfassen, die Stapelzustand-Sensoreinheit eine Zahl von n Shunt-Widerständen umfasst und erste Enden des ersten bis n-ten Shunt-Widerstands jeweils mit positiven Elektroden des ersten bis n-ten Stapels verbunden sind,
die positive-Spannung-Schalteinheit erste bis n-te positive-Spannung-Schalter umfasst, die negative-Spannung-Schalteinheit erste bis n-te negative-Spannung-Schalter umfasst und die verschlechterte-Stapel-Verbindungsschalteinheit erste bis n-te verschlechterte-Stapel-Verbindungsschalter umfasst,
jeder von dem ersten bis n-ten positive-Spannung-Schalter einen gemeinsamen Anschluss und erste bis dritte Anschlüsse umfasst, wobei jeder von dem ersten bis n-ten negative-Spannung-Schalter einen gemeinsamen Anschluss und erste bis dritte Anschlüsse umfasst, jeder von dem ersten bis (n-1)-ten verschlechterte-Stapel-Verbindungsschalter einen gemeinsamen Anschluss und erste bis dritte Anschlüsse umfasst und der n-te verschlechterte-Stapel-Verbindungsschalter einen gemeinsamen Anschluss, einen ersten Anschluss und einen zweiten Anschluss umfasst,
jeder von dem ersten bis n-ten positive-Spannung-Schalter, dem ersten bis n-ten negative-Spannung-Schalter und dem ersten bis (n-1)-ten verschlechterte-Stapel-Verbindungsschalter in Antwort auf ein Steuersignal der Steuereinheit den entsprechenden gemeinsamen Anschluss mit einem der entsprechenden ersten bis dritten Anschlüsse verbindet und der n-te verschlechterte-Stapel-Verbindungsschalter in Antwort auf ein Steuersignal der Steuereinheit den entsprechenden gemeinsamen Anschluss mit dem entsprechenden ersten oder zweiten Anschluss verbindet.

9. Vorrichtung gemäß Anspruch 8, wobei die gemeinsamen Anschlüsse der ersten bis n-ten positive-Spannung-Schalter jeweils mit zweiten Enden von ersten bis n-ten Shunt-Widerständen verbunden sind, die ersten Anschlüsse der ersten bis n-ten positive-Spannung-Schalter jeweils mit einem positive-Spannung-Eingangsanschluss des Haupt-Stromkonditionierungssystems verbunden sind und die zweiten Anschlüsse der ersten bis n-ten positive-Spannung-Schalter offen sind,
die gemeinsamen Anschlüsse der ersten bis n-ten negative-Spannung-Schalter jeweils mit negativen Elektroden der ersten bis n-ten Stapel verbunden sind, die ersten Anschlüsse der ersten bis n-ten negative-Spannung-Schalter mit einem negative-Spannung-Eingangsanschluss des Haupt-Stromkonditionierungssystems verbunden sind und die zweiten Anschlüsse der ersten bis n-ten negative-Spannung-Schalter offen sind,
die gemeinsamen Anschlüsse der ersten bis (n-1)-ten verschlechterte-Stapel-Verbindungsschalter jeweils mit den dritten Anschlüssen der zweiten bis n-ten positive-Spannung-Schalter verbunden sind, die ersten Anschlüsse der ersten bis (n-1)-ten verschlechterte-Stapel-Verbindungsschalter jeweils mit den dritten Anschlüssen der ersten bis n-ten negative-Spannung-Schalter verbunden sind, die zweiten Anschlüsse der zweiten bis n-ten verschlechterte-Stapel-Verbindungsschalter jeweils mit den gemeinsamen Anschlüssen der ersten bis (n-1)-ten verschlechterte-Stapel-Verbindungsschalter verbunden sind, die dritten Anschlüsse der ersten bis (n-1)-ten verschlechterte-Stapel-Verbindungsschalter und der gemeinsame Anschluss des n-ten verschlechterte-Stapel-Verbindungsschalters mit einem negative-Spannung-Eingangsanschluss des Unter-Stromkonditionierungssystems verbunden sind und der zweite Anschluss des ersten verschlechterte-Stapel-Verbindungsschalters und das dritte Anschluss des ersten positive-Spannung-Schalters mit einem positive-Spannung-Eingangsanschluss des Unter-Stromkonditionierungssystems verbunden sind.

10. Vorrichtung gemäß Anspruch 1, wobei die Brennstoffzellenstapel in einem Feld von n1 x 1, n1 x n2 oder n1 x n2 x n3 angeordnet sind, wobei jedes von n1, n2 und n3 eine ganze Zahl von 2 oder größer ist.

11. Vorrichtung gemäß Anspruch 10, wobei die Stapel des Stapelfelds in Reihe, parallel oder Reihenparallel miteinander verbunden sind.

12. Vorrichtung gemäß Anspruch 1, wobei die Brennstoffzellenstapel eine Vielzahl von Brennstoffzellenstapelmodulen bilden, von denen jeder eine vorbestimmte Zahl von Brennstoffzellenstapeln umfasst, und
die Steuereinheit Zustände der Brennstoffzellenstapelmodule erfasst und wobei, wenn wenigstens ein verschlechterter Stapelmodul erkannt wird, der wenigstens eine verschlechterte Stapelmodul von dem Haupt-Stromkonditionierungssystem getrennt wird.

13. Vorrichtung gemäß Anspruch 12, wobei die Steuereinheit die Abgabe des wenigstens einen verschlechterten Stapelmoduls mit dem Unter-Stromkonditionierungssystem verbindet.

14. Verfahren zum Steuern eines Brennstoffzellensystems, umfassend:
durch eine Steuereinheit Bestimmen unter Verwendung von Informationen über Zustände von Brennstoffzellenstapeln, ob wenigstens ein verschlechterter Stapel oder funktionsunfähiger Stapel vorhanden ist; und
Steuern einer Schalteinheit, wenn erkannt wird, dass wenigstens ein verschlechterter Stapel oder funktionsunfähiger Stapel vorhanden ist, und Trennen der Abgabe des wenigsten einen verschlechterten Stapels oder funktionsunfähigen Stapels von einem Haupt-Stromkonditionierungssystem,
wobei die Steuereinheit die Schaltereinheit steuert und die Abgabe des wenigstens einen verschlechterten Stapels mit einem Unter-Stromkonditionierungssystem verbindet,
wobei das Unter-Stromkonditionierungssystem die Abgabe von einem oder mehreren verschlechterten Stapel mit einer Last verbindet.

15. Verfahren gemäß Anspruch 14, wobei die normalen Stapel, die ihre Abgabe an das Haupt-Stromkonditionierungssystem liefern, ohne den wenigstens einen verschlechterten Stapel miteinander in Reihe, parallel oder Reihenparallel wiederverbunden werden.

16. Verfahren gemäß Anspruch 14, wobei verschlechterte Stapel, die ihre Abgabe an das Unter-Stromkonditionierungssystem liefern, in Reihe miteinander verbunden werden.

17. Verfahren gemäß Anspruch 16, wobei die Schalteinheit umfasst:
eine positive-Spannung-Schalteinheit zum Schalten eines Ziels, dem positive Spannung von jedem der Brennstoffzellenstapel zugeführt wird;
eine negative-Spannung-Schalteinheit zum Schalten eines Ziels, dem negative Spannung von jedem der Brennstoffzellenstapel zugeführt wird; und
eine verschlechterte-Stapel-Verbindungsschalteinheit, die die verschlechterten Stapel in Reihe miteinander verbindet und die Abgabe der verschlechterten Stapel dem Unter-Stromkonditionierungssystem zuführt.

18. Verfahren gemäß Anspruch 14, wobei die Brennstoffzellenstapel eine Vielzahl von Brennstoffzellenstapelmodulen bilden, von denen jeder eine vorbestimmte Zahl von Brennstoffzellenstapeln umfasst, und
die Steuereinheit Zustände der Brennstoffzellenstapelmodule erfasst und wobei, wenn wenigstens ein verschlechterter Stapelmodul erkannt wird, der wenigstens eine verschlechterte Stapelmodul von dem Haupt-Stromkonditionierungssystem getrennt wird.

19. Verfahren gemäß Anspruch 18, wobei die Steuereinheit die Abgabe des wenigstens einen verschlechterten Stapelmoduls mit dem Unter-Stromkonditionierungssystem verbindet.

## Revendications

1. Appareil de commande d'un système de pile à combustible, comprenant :
un système de conditionnement principal de puissance pour fournir une sortie d'empilements normaux parmi une pluralité d'empilements de piles à combustible à une charge ;
un système de conditionnement auxiliaire de puissance pour fournir une sortie d'un ou plusieurs empilements détériorés parmi les empilements de piles à combustible à une charge ;
une unité de commutation pour changer une cible à laquelle une sortie de chacun des empilements de piles à combustible est connectée ; et
une unité de commande pour des états de chacun des empilements de piles à combustible et pour commander l'unité de commutation.

2. Appareil selon la revendication 1, comprenant en outre :
une unité de détection d'états d'empilement pour détecter des états des empilements de piles à combustible et transmettre des informations concernant les états des empilements de piles à combustible à l'unité de commande.

3. Appareil selon la revendication 2, dans lequel lorsqu'au moins un empilement détérioré est détecté d'après les informations transmises concernant les états des empilements de piles à combustible, l'unité de commande sépare une sortie de l'au moins un empilement détérioré du système de conditionnement principal de puissance et connecte la sortie au système de conditionnement auxiliaire de puissance.

4. Appareil selon la revendication 2, dans lequel lorsqu'au moins un empilement inopérant est détecté d'après les informations transmises concernant les états des empilements de piles à combustible, l'unité de commande sépare l'empilement inopérant du système de conditionnement principal de puissance.

5. Appareil selon la revendication 3, dans lequel les empilements normaux qui fournissent leurs sorties au système de conditionnement principal de puissance sont reconnectés en série, en parallèle ou en série-parallèle les uns aux autres, autres que l' au moins un empilement détérioré.

6. Appareil selon la revendication 3, dans lequel lorsque les un ou plusieurs empilements détériorés sont reconnectés en série.

7. Appareil selon la revendication 2, dans lequel l'unité de commutation comprend :
une unité de commutation de tension positive pour commuter une cible à laquelle une tension positive de chacun des empilements de piles à combustible est fournie ;
une unité de commutation de tension négative pour commuter une cible à laquelle une tension négative de chacun des empilements de piles à combustible est fournie ; et
une unité de commutation de connexion d'empilements détériorés connectant les empilements détériorés en série les uns aux autres et fournissant une sortie des empilements détériorés au système de conditionnement auxiliaire de puissance.

8. Appareil selon la revendication 7, dans lequel lorsque n est un nombre entier de 2 ou plus, les empilements comprennent un nombre n d'empilements, l'unité de détection d'états d'empilement comprend un nombre n de résistances de dérivation, et des premières extrémités des première à n^{ième} résistances de dérivation sont connectées respectivement à des électrodes positives des premier à n^{ième} empilements,
l'unité de commutation de tension positive comprend des premier à n^{ième} commutateurs de tension positive, l'unité de commutation de tension négative comprend des premier à n^{ième} commutateurs de tension négative, et l'unité de commutation de connexion d'empilements détériorés comprend des premier à n^{ième} commutateurs de connexion d'empilements détériorés,
chacun des premier à n^{ième} commutateurs de tension positive comprend une borne commune et des première à troisième bornes, chacun des premier à n^{ième} commutateurs de tension négative comprend une borne commune et des première à troisième bornes, chacun des premier à (n-1)^{ième} commutateurs de connexion d'empilements détériorés comprend une borne commune et des première à troisième bornes, et le n^{ième} commutateur de connexion d'empilements détériorés comprend une borne commune, une première borne et une deuxième borne,
chacun des premier à n^{ième} commutateurs de tension positive, des premier à n^{ième} commutateurs de tension négative, et des premiers à (n-1)^{ième} commutateurs de connexion d'empilements détériorés connecte la borne commune correspondante à l'une des première à troisième bornes correspondantes en réponse à un signal de commande de l'unité de commande, et le n^{ième} commutateur de connexion d'empilements détériorés connecte la borne commune correspondante à la première ou deuxième borne correspondante en réponse à un signal de commande de l'unité de commande.

9. Appareil selon la revendication 8, dans lequel les bornes communes des premier à n^{ième} commutateurs de tension positive sont connectées respectivement à des secondes extrémités des première à n^{ième} résistances de dérivation, les premières bornes des premier à n^{ième} commutateurs de tension positive sont connectées respectivement à une borne d'entrée de tension positive du système de conditionnement principal de puissance, et les deuxièmes bornes des premier à n^{ième} commutateurs de tension positive sont ouvertes,
les bornes communes des premier à n^{ième} commutateurs de tension négative sont connectées respectivement à des électrodes négatives des premier à n^{ième} empilements, les premières bornes des premier à n^{ième} commutateurs de tension négative sont connectées à une borne d'entrée de tension négative du système de conditionnement principal de puissance, et les deuxièmes bornes des premier à n^{ième} commutateurs de tension négative sont ouvertes,
les bornes communes des premier à (n-1)^{ième} commutateurs de connexion d'empilements détériorés sont connectées respectivement aux troisièmes bornes des deuxièmes à n^{ième} commutateurs de tension positive, les premières bornes des premier à n^{ième} commutateurs de connexion d'empilements détériorés sont connectées respectivement aux troisièmes bornes des premier à n^{ième} commutateurs de tension négative, les deuxièmes bornes des deuxième à n^{ième} commutateurs de connexion d'empilements détériorés sont connectées respectivement aux bornes communes des premier à (n-1)^{ième} commutateurs de connexion d'empilements détériorés, les troisièmes bornes des premier à (n-1)^{ième} commutateurs de connexion d'empilements détériorés et la borne commune du n^{ième} commutateur de connexion d'empilements détériorés sont connectées à une borne d'entrée de tension négative du système de conditionnement auxiliaire de puissance, et la deuxième borne du premier commutateur de connexion d'empilements détériorés et la troisième borne du premier commutateur de tension positive sont connectées à une borne d'entrée de tension positive du système de conditionnement auxiliaire de puissance.

10. Appareil selon la revendication 1, dans lequel les empilements de piles à combustible à une charge sont agencés dans un réseau de n1 x 1, n1 x n2 ou n1 x n2 x n3, lorsque chacun de n1, n2 et n3 est un nombre entier de 2 ou plus.

11. Appareil selon la revendication 10, dans lequel les empilements du réseau d'empilements sont connectés en série, en parallèle ou en série-parallèle les uns aux autres.

12. Appareil selon la revendication 1, dans lequel les empilements de piles à combustible forment une pluralité de modules d'empilement de piles à combustible, dont chacun comprend un nombre prédéterminé d'empilements de piles à combustible, et l'unité de commande détecte des états des modules d'empilement de piles à combustible, et lorsqu'au moins un module d'empilement détérioré est détecté, l'au moins un module d'empilement détérioré est séparé du système de conditionnement principal de puissance.

13. Appareil selon la revendication 12, dans lequel l'unité de commande connecte une sortie de l'au moins un module d'empilement détérioré au système de conditionnement auxiliaire de puissance.

14. Procédé de commande d'un système de pile à combustible, comprenant :
la détermination, par une unité de commande, permettant de savoir si au moins un empilement détérioré ou empilement inopérant est présent à l'aide d'informations concernant des états d'empilements de piles à combustible ; et
la commande d'une unité de commutation lorsqu'il est déterminé qu'au moins un empilement détérioré ou empilement inopérant est présent, et la séparation d'une sortie de l'au moins un empilement détérioré ou empilement inopérant d'un système de conditionnement principal de puissance,
dans lequel l'unité de commande commande l'unité de commutation et connecte la sortie de l'au moins un empilement détérioré à un système de conditionnement auxiliaire de puissance,
dans lequel le système de conditionnement auxiliaire de puissance fournit une sortie d'un ou plusieurs empilements détériorés à une charge.

15. Procédé selon la revendication 14, dans lequel les empilements normaux qui fournissent une sortie au système de conditionnement principal de puissance sont reconnectés en série, en parallèle ou en série-parallèle les uns aux autres, autres que l'au moins un empilement détérioré.

16. Procédé selon la revendication 14, dans lequel des empilements détériorés qui fournissent une sortie au système de conditionnement auxiliaire de puissance sont connectés en série les uns aux autres.

17. Procédé selon la revendication 16, dans lequel l'unité de commutation comprend :
une unité de commutation de tension positive pour commuter une cible à laquelle une tension positive de chacun des empilements de piles à combustible est fournie ;
une unité de commutation de tension négative pour commuter une cible à laquelle une tension négative de chacun des empilements de piles à combustible est fournie ; et
une unité de commutation de connexion d'empilements détériorés connectant les empilements détériorés en série les uns aux autres et fournissant la sortie des empilements détériorés au système de conditionnement auxiliaire de puissance.

18. Procédé selon la revendication 14, dans lequel les empilements de piles à combustible forment une pluralité de modules d'empilements de piles à combustible, dont chacun comprend un nombre prédéterminé d'empilements de piles à combustible, et l'unité de commande détecte des états des modules d'empilement de piles à combustible, et lorsqu'au moins un module d'empilement détérioré est détecté, l'au moins un module d'empilement détérioré est séparé du système de conditionnement principal de puissance.

19. Procédé selon la revendication 18, dans lequel l'unité de commande connecte une sortie de l'au moins un module d'empilement détérioré au système de conditionnement auxiliaire de puissance.
